# EUROPEAN PATENT APPLICATION

(11) **EP 4 563 269 A1**
(43) Date of publication of application: **04.06.2025**
(21) Application number: 23213172.2
(22) Date of filing: 29.11.2023
(51) Int. Cl.: B23B 31/20, B23B 13/12

(54) **METHOD FOR MACHINING A WORKPIECE AND ADAPTER FOR USE WHEN MACHINING A WORKPIECE**

(71) Applicant: DMG MORI Bergamo S.r.l., 24030 Brembate di Sopra (BG) (IT)
(72) Inventor: PASSERINI, Mirko, 20083 Gaggiano (IT); MILESI, Luca, 24015 San Giovanni Bianco (IT)
(74) Representative: MERH-IP Matias Erny Reichl Hoffmann Patentanwälte PartG mbB

(57) **Abstract**

The present system relates to an improvement of an adaptor for supporting a workpiece 4a in a machine tool, in particular a lathe, wherein the adaptor has a main body 1 with a hole 4 extending along an axial direction of the main body 1, the through hole 4 is forming an inner support surface (2) for receiving the workpiece 4a, the main body 1 further includes an outer support surface 3 which is an outer circumferential surface 3 of the main body 1, and the main body 1 is configured to be inserted into a clamping mechanism 5 of the machine tool and to be coupled to the clamping mechanism with the outer support surface 3, wherein the shape of the cross-section of the outer support surface 3 is different from the shape of the cross-section of the inner support surface, and the inner support surface 2 is constant along the axial direction.

## Description

The present invention relates to a method and to an adapter configured to improve the connection between a chuck and/or adapter of a machine tool, in particular lathe, and an elongated workpiece.

### BACKGROUND ART

Workpieces are commonly supported for rotation with the spindle of a lathe by mounting the workpiece in a chuck or in a draw-in collet. However, for working with workpieces of different shapes, it is commonly required to remove the lathe chuck and change it to a different clamping tool. Such a process is time-consuming and makes the machining process more complicated.

Machining of workpieces is realized on various types of machine tools, which may be a drill press, CNC machine, lathe, or any other similar device that can utilize a removable tool to perform machining operations on a workpiece. Similarly, the tool may be any elongated object such as a drill or milling bit, a lathe cutter, or any other tool having a generally-cylindrical base portion that can be received within a substantially tubular recess.

Usually, the workpieces or tools are held by the appropriate clamping mechanism. Also, in order to machine the workpieces with different shapes or sizes, different clamping systems can be implemented, such as a scroll chuck, a collet, different chucks, and other means commonly used in industry.

For example, the collet/adapter assembly may be employed to equip the lathe with a tool- or workpiece-supporting collet that includes a conventional draw-in collet, some connection means, and a collet adaptor.

For example, PTL 1 discloses a collet/adapter assembly that can be connected to a lathe spindle for rotation therewith without removing the lathe chuck. In this system, the collet can be connected to the chuck of the spindle via an adapter. As a result, the collet can be mounted. Including a conventional draw-in collet, a spindle nose, and a collet adapter.

As a result, PTL 1's system is designed to provide an additional adapter for changing between different clamping mechanisms. This solution does not help with the connection between the clamping mechanism and elongated workpieces, which may have a non-standard shape or an irregular cross-section.

### CITATION LIST

PTL 1: WO 8807904 A1

### PROBLEMS TO BE SOLVED BY THE INVENTION

As can be seen, normally different types of clamping mechanisms or a combination of clamping mechanisms are used to hold the workpieces of different sizes, but commonly used shapes are polygonal or circular. However, it is difficult to reliably hold the workpieces with irregular cross-sections with the standard clamping mechanisms. In addition, the efficiency of the standard clamping mechanism and its gripping strength can be insufficient for holding the workpiece and for further machining operations.

As a result, the unreliable clamping of the workpiece can lead to the workpiece being machined with processing errors that cannot be tolerated due to an excessive protrusion of the bar or imprecise machining of the workpiece.

In other words, there is a risk of losing the workpiece, thus increasing a probability of obtaining a non-optimal product due to a change in the position of the workpiece while performing the machining operations on the workpiece. Even further, during the machining operations on the workpiece, the irregular shape held by commonly used clamping mechanisms may increase the risk of causing harm to the operators.

The considerations above are applied, especially when the shape of the workpiece is highly irregular and cannot be efficiently held by standard collets or chucks, the problems above can occur. Thus, there is a certain demand for technologies that can mitigate the potential problems of machining workpieces with an irregular cross-section.

Furthermore, changing collets or chucks in the machine tool usually requires a lot of time, thus, further optimizing the clamping system with an adaptor of the machine tools for machining the workpiece with the irregular shape without the need to change collets would further facilitate the operation efficiency and improve the overall speed of the machining process.

### MEANS TO SOLVE THE PROBLEMS

The problems cited above are solved in accordance with the appended set of claims. Specifically, an adaptor for supporting a workpiece in a machine tool, in particular a lathe, may be suggested wherein the adaptor has a main body with a hole extending along an axial direction of the main body, the hole is forming an inner support surface for receiving the workpiece. The main body may further include an outer support surface which is an outer circumferential surface of the main body. The main body may be configured to be inserted into a chuck of the machine tool and to be coupled to the chuck with the outer support surface. The shape of the cross-section of the outer support surface may be different from the shape of the cross-section of the inner support surface. The inner support surface may be constant along the axial direction. More preferably, the cross-section of the inner support surface is constant along the axial direction, along the entire (axial) length of the main body or at least along half of the (axial) length of the main body.

The shapes of the inner and outer support surfaces referred above may be defined as a geometrical figures formed on a surface by the inner and outer surfaces orthogonal to the axial direction. In the present case, the sizes of the figures are not relevant with regard to comparison of their shapes. For example, circular shapes of outer and inner support surfaces with different diameters are considered as the same shape. Furthermore, the outer support surface of quadratic shape is considered to be the same as the inner support surface of quadratic shape shifted to some angle with regard to the outer support surface. As an additional example, the outer support surface of hexagonal shape is considered different from the inner support surface of circular shape.

Summarizing the above, the shapes are considered different when their respective symmetries are different from each other. The difference between symmetries is elaborated further in the description.

With the adaptor, it is possible to further improve the overall speed of the machining operations for the workpiece in the machine tool by avoiding a change between different clamping systems. In addition, a workpiece with an irregular cross-section can be reliably held by the inner support surface, which efficiently prevents possible misalignment of the workpiece or the possibility of losing the workpiece during the machining operations.

The adaptor may be configured to be inserted into the clamping mechanisms, for example a chuck, of the lathe and fixed only by being clamped by the clamping mechanism.

In addition, when the workpiece is loaded into the spindle or clamping mechanism of a machine tool, the position of the workpiece is axially maintained by the clamping system.

Another aspect of the present disclosure is that the hole may extend along an axial direction through the main body. Such an adaptor can be implemented in the system with bar feeding mechanisms or introduced in the Swiss-type lathes.

Furthermore, the inner support surface may have an irregular cross-section. In addition, the outer support surface may have a regular cross-section. Specifically, the regular cross-section refers to the typical shapes of the tools or clamping mechanisms used in the art, i.e., circular, and high symmetry polygonal shapes. The irregular cross-section refers to the shapes other than typical shapes used in industry, i.e., not circular, or not high symmetry polygonal shapes. In other words, the shape of the irregular cross-section may have different symmetry from the shape of the regular cross-section.

In a preferable further development, the surface roughness of the outer support surface is different from the surface roughness of the inner support surface. In particular the surface roughness of the outer support surface is higher than the surface roughness of the inner support surface.

Such a system enables, an effective holding of the elongated workpiece via friction in a reliable manner.

Another aspect of the present disclosure is that the cross-section of the outer support surface orthogonal to the axial direction has a higher symmetry, in particular higher point group symmetry with regard to the axial direction, than the cross section orthogonal to the axial direction of the inner support surface.

Such a system enables, an effective holding of the elongated workpiece via friction in a reliable manner.

As a possible modification, the cross-section of the outer support surface may remain constant along the axial direction which may prevent an excessive pressure applied to parts of the adaptor from the clamping mechanisms, such as a collet or a chuck. In other words, the distance between the outer support surface to the longitudinal axis or axial direction of the adaptor may be constant over the entire axial length of the adaptor or at least the centre of the adaptor.

The provided adaptor may be designed to be used in combination with commonly used clamping systems such as collets, scroll chucks, and other types of chucks. Another aspect of the present disclosure is that the adaptor may have the outer support surface with a cylindrical or polygonal shape extending along the axial direction, and wherein the shape of the cross section of the inner support surface matches a cross-section of the received workpiece. The workpiece may have an irregular shape of the cross-section orthogonal to the axial direction.

Such a system enables, an effective holding of the elongated workpiece via friction in a reliable manner. Thus, the stability when the workpiece is clamped is improved while the clamping position of the workpiece is finely adjusted, and thus the efficiency of clamping the workpiece is improved.

Thus, by using common shapes of the cross-section of the outer support surface it is possible to efficiently combine the adaptor with different clamping mechanisms. For example, an opening in the clamping mechanism (collet) with a shape of polygonal prism normally has a high symmetry. For example, the opening in the collet can have a regular polygon shape, in which all angles between different sides of the polygon are equal to each other and all the sides have the same length. Thus, an n-sided polygon has rotational symmetry of order n, in other words n-sided polygonal prism has at least rotation symmetry operation of order n, Cn, rotation by 360°/n. In the present case the symmetry operations are considered with regard to the axial direction.

Furthermore, preferably, the cross-section of the outer support surface orthogonal to the axial direction has a higher symmetry, specifically a higher point group symmetry with regard to the axial direction, than the cross section orthogonal to the axial direction of the inner support surface. The outer support surface of the adaptor has the shape of a cross-section of a commonly used tool or workpiece used in the art, which have normally high point symmetry groups. In contrast to the outer support surface, the inner support surface with irregular cross-section may be characterized by mostly low symmetry point groups.

As a general rule, the symmetry of the cross-section of the inner support surface is smaller than the symmetry of the cross-section of the outer support surface. For example, if the outer support surface has a maximum symmetry rotation operation of Cn rotation about a fixed point by multiples of the angle 360 °/n, the inner support surface has a maximum symmetry rotation operation Cn-1 or lower.

However, the workpiece with the irregular cross-section may have a limited number of symmetry operations, in particular, only one twofold axis of rotation and two nonequivalent mirror planes. Alternatively, the workpiece with the irregular cross-section may have only one single reflection operation, which means that the figure (cross-section of the workpiece) has only a single axis of bilateral symmetry.

Such a system enables, an effective holding of the elongated workpiece via friction in a reliable manner. Thus, the stability when the workpiece is clamped is improved while the clamping position of the workpiece is finely adjusted, and thus the efficiency of clamping the workpiece is improved.

According to another aspect of the disclosure, the workpiece with the irregular cross-section may be entirely asymmetric with regard to the axial direction. The asymmetry of the workpiece with the irregular cross-section means that the cross-section of the workpiece has only the trivial group symmetry, C1, which contain only the identity operation of rotation by 360°.

According to another aspect of the disclosure, the cross-section of the inner support surface may be asymmetric or may have a low symmetry about an axis orthogonal to the axial direction as well. In particular, asymmetric means that there are no symmetry operations available for the current cross-section in two dimensions. An identity operation C1 is the only available operation. As a result, it may be difficult to hold the workpiece with the irregular cross-section by the hollow portion of the collet, wherein the hollow portion of the collet does not extend through the whole collet.

In the present case, the axial direction for the machining tool has a common meaning suitable in the art and also called as longitudinal axis. For example, the axial direction can be defined as an axis formed by the spindle and the rotating workpiece. Cross-section of the outer support surface and the inner support surface are orthogonal to the axial direction.

By default, the cross-section of the support surfaces discussed further in the application are orthogonal to the axial direction.

In order to avoid misinterpretation, the symmetries can be described by the point groups in two dimensions, which define isometries in the Euclidian space. For example, the two-dimensional point groups can be cyclic group Cn which has n-fold rotation symmetry and dihedral group which has n-fold rotation and n-fold reflections symmetries.

In the present case, the inner support surface for the workpiece with the irregular cross-section usually has a lower symmetry group than the outer support surface. The symmetries can be compared in the framework of the present application, for example, by comparing the highest symmetry operation available for the cross-section, especially, by comparing the outer support surface and inner support surface cross-sections.

For example, the group with the highest degree of operation as C6, which corresponds to a symmetry with regard to a rotation by 60°, is considered to have higher symmetry than the group with the highest degree of symmetry operation as C2, which corresponds to a symmetry of the cross-section with regard to a rotation by 180°.

Alternatively, the symmetries of the groups of inner support surface and outer support surface cross-sections can be compared based on a total number of symmetry operations available for the cross-section of the outer support surface orthogonal to the axial direction and the total number of symmetry operations for the inner support surface cross-section orthogonal to the axial direction.

As a result, by implementing the adaptor according to the present disclosure, it is possible to efficiently clamp the workpiece with the irregular cross-section by the clamping mechanism via the adaptor without a necessity to change the collet/chuck or to introduce other support mechanisms.

Another aspect of the present disclosure is that the main body of the adaptor may have holes and/or protrusions and the main body is adapted to (elastically) transfer a clamping force applied to the outer support surface to the inner support surface to clamp a workpiece.

Preferably, the adaptor may have holes and/or protrusions in the main body that are not extended through the whole main body in the axial direction, which allows the adaptor to be elastically deformed and constrict the tool that is placed within the inner support surface. As a result, the problem that the workpiece is deformed due to clamping force and/or cutting force during machining of the workpiece is solved by the combination of using the adaptor of the claimed disclosure.

In addition, the positions of the holes and protrusions/slits in the main body may be placed in order to obtain substantially uniform transfer of the clamping force applied to the outer support surface from the chuck or collet (clamping mechanism) to the inner support surface of the main body.

In addition, the shape of the outer support surface of the main body in the axial direction may be divided into, at least, the first part and second part. In the first part, the slits and/or holes are extended through the main body, and the shape of the outer support surface is constant along axial direction. For example, the length of the first part of the adaptor can be up to 60-90% of the length of the main body 1 in the axial direction. In the second part of the main body, the size of the outer support surface can gradually decrease and wherein the shape of the second part can have different shape with smaller axial length in comparison to the first part

Furthermore, the slits and holes may extend to a certain point, certain length of the main body, for example up to 60-90% of the length of the main body in the axial direction. The slits can be distributed may be radially displaced from each other on the same angle between 0-120°, preferably between 10-60°. Alternatively, slits may be displaced from each other on different angles in radial direction.

Another aspect of the present disclosure that the adaptor may have at least two of the main bodies which are configured to be spatially displaced from each other along the axial direction when received in the clamping mechanism. The cross sections of the inner support surfaces of the two main bodies have the same shape and are configured to slidably receive the workpiece having an irregular cross-section. The main body may have a plurality of body segments which are separated from each other on one side of the main body and connected to each other on the other side of the main body.

By using adaptors consisting of two or more main bodies of the adaptor, it is possible to improve the fixation of the workpiece and distribute the pressure applied from the clamping mechanism to different areas of the workpiece. Optionally, several adaptor bodies can be spatially displaced from each other at the same distance, and the clamping force is applied to each of them from the clamping mechanism, for example, a collet or a chuck. The shape of the cross-section of the inner support surface orthogonal to the axial direction is the same for each of the main bodies.

Another aspect of the disclosure is that the friction coefficients between the outer support surface and the inner support surface may be different. Specifically, the friction coefficient of the inner support surface may be lower than the friction coefficient of the outer support surface.

Such adaptor enables, an effective holding of the elongated workpiece via friction in a reliable manner. Thus, the stability when the workpiece is clamped is improved while the clamping position of the workpiece is finely adjusted, and thus the efficiency of clamping the workpiece is improved.

Alternatively, the main bodies can be displaced at different distances from each other, which may be related to the weight distribution in the workpiece. On the other hand, the shape of the inner support surfaces orthogonal to the axial direction of the main bodies may have different shapes. Different shapes of the cross-section of the adaptor body may be helpful when a holding part of the workpiece has different thickness across different parts of the workpiece. The different thickness of the holding part of the workpiece may be a result of just the uneven shape of the workpiece in the axial direction, or may result from some damage to the holding part of the workpiece. For example, the holding part of the workpiece may have protrusions and/or holes, which may result in a decrease in the efficiency of holding the workpiece by the clamping system.

Furthermore, the adaptor system may be implemented in order to further improve holding of the workpiece. Specifically, an adaptor system can be proposed comprising an adaptor as described above and one or more guiding elements, wherein each guiding element comprises a guide body, a guide outer support surface, a guide inner support surface and a through hole extending along the axial direction through the guide body, wherein the guide inner support surface is configured to receive the workpiece and the guide outer support surface is an outer circumferential surface of the guide body, and wherein the shape of a cross-section of the guide outer support surface and the guide inner support surface are different.

It is noted that the adaptor is clamped by the clamping mechanism of the spindle of the machining tool, wherein the further elements, as guiding elements, are placed in the spindle or outside the spindle in a feeding device of the machine tool for feeding very long workpieces.

Another aspect of the present disclosure that the one or more guiding elements may be movable along the axial direction and configured to be coupled to the workpiece through friction, and wherein the guide outer support surface preferably remains constant along the axial direction.

Another aspect of the disclosure is that the friction coefficients between the guide outer support surface and the guide inner support surface may be different. Specifically, the friction coefficient of the guide inner support surface may be higher than the friction coefficient of the guide outer support surface.

Specifically, the guiding elements may be used to support the workpiece inside the spindle and/or a bar loader. In addition, in view of the irregular shape of the received workpiece, the guiding elements are non-rotating with respect to the workpiece due to the shape coupling between the workpiece and the guide inner support surface and a frictional contact between the adaptor, one or more guiding elements, and the workpiece. At the same time, the axial position is maintained during the axial movement of the workpiece in case of the Swiss type lathe or similar machine tools.

An addition of further guiding elements is very helpful in machining a very long, elongated workpiece that cannot be reliably held by the clamping system alone. As a result, it can be worth it to introduce further elements in a machine tool, for example, a lathe, CNC machines, etc. One or more guiding elements may be located in the spindle part of the machine tool. The guidingelements are positioned similarly to the adaptors; specifically, the guide inner support surface is orthogonal to the axial direction. Furthermore, for such long workpieces, the shape of the profile of the workpiece, or the shape of the cross-section orthogonal to the axial direction, is substantially the same. Thus, the guide inner support surface may have the same orientation and shape as the inner support surface of the adaptor of the main body. Sometimes, several guiding elements are referenced in the application; however, a system comprised of the adaptor and only one guiding element can be used as well.

One of the differences between the guiding elements and the main body of the adaptor is that the guiding elements are movable along the axial direction, and the guiding elements are coupled to the elongated workpiece through friction. As a result, during the machining, the workpiece may be pulled in the axial direction and be supported through the whole process by the flexible movable guiding elements.

Furthermore, at least one, preferably each, guiding element may comprise connection means, and the one or more guiding elements are configured to connect, in particular by interlocking, with the main body of the adaptor or adjacent guiding elements through the connection means, when moved axially along with the workpiece.

In addition, the guiding elements stop their axial movement when they touch or connect with another guiding element, or adaptor, or a stopping mechanism which prevents the guiding elements from goingto the machining area of the machine tool.

In a case where several guiding elements are used, the connection means that it may connect several guiding elements together after the elongated workpiece is pulled out of the machine tool. As a result, the orientation of the guiding elements can be efficiently maintained.

Another aspect of the present disclosure is that the adaptor system may comprise the connection means which have one or more pins, and the guide body has one or more holes, wherein the holes are located at a guide second side of the guide body, wherein pins are extending along the axial direction, and wherein by stacking the guide elements together the pins of one guide element are slidably moved into the holes of another guide element/adjacent guide element in the axial direction, and a guide first side and a guide second side are side surfaces of the guide body orthogonal to the axial direction.

Furthermore, at least one guiding element may have at least one hole and one pin in the guide main body and the main body. Preferably, the guiding element has at least two holes and two pins adjacent to the position of the holes located on another side of the guide main body. By applying pins and holes in the guiding elements the relative rotational position of the stacked guiding elements with regard to the workpiece can be maintained. The adaptor is clamped by the clamping mechanism and is not movable in axial direction in the clamped state. As a result, the adaptor may comprise at least one hole for receiving at least one pin of the guiding element.

Another aspect is that the connection means of the at least one guiding element has one or more interlocking means, preferably hooks, and the guide body has one or more openings, wherein the interlocking means are arranged at a guide element first side and extend along the axial direction. One or more openings are provided at a guide element second side at an opposite position from the interlocking means at the guide element first side. When the guiding elements are stacked together the interlocking means of the one guiding element are pushed and/or clamped into the openings of an adjacent guiding element for preventing (relative) movement of the staked guiding elements in the axial direction after interlocking. The guide element first side and the guide element second side are side surfaces of the guide body orthogonal to the axial direction.

The advantage of using the hooks and apertures as connection means is that it is possible to maintain the stacked guiding elements relative to each other in the axial position. Thus, it is possible to remove all the elements together in one move. As a result, the efficiency and speed of operations have improved.

Furthermore, the adaptor can be part of an adaptor/clamping mechanism system, wherein the adaptor/clamping mechanism system may comprise the adaptor as described above and the clamping mechanism such as collet, chuck and etc.

Furthermore, another aspect of the present disclosure is a machine tool for machining a workpiece which may comprise a spindle for rotating the workpiece around the axial direction, a clamping system comprising a clamping mechanism and an adaptor, wherein the clamping mechanism is connected to the spindle and applies clamping force to the adaptor and/or to the workpiece therebetween.

Furthermore, the adaptor system can also be introduced in the machine tool. In such configuration, the adaptor is clamped by the clamping system and the guiding elements are located in the spindle or the bar feeder.

In addition, the adaptor as described above can be introduced in a method for machining a workpiece. Specifically, a method for machining a workpiece with a machine tool, the method may comprise one or more of the steps: receiving the workpiece by an adaptor which is arranged in a clamping mechanism of the machine tool, in particular a chuck; wherein the adaptor has a main body with a through hole extending along an axial direction through the main body, and an inner support surface for receiving the elongated workpiece and an outer support surface which is an outer circumferential surface of the main body, wherein the main body is coupled to the chuck via a friction and/or form-fitting connection at the outer support surface and a shape of the cross-sections orthogonal to the axial direction of the outer support surface and the inner support surface are different. The method further including the step of fixing, by applying a friction connection, a position of the workpiece by applying a clamping force to the adaptor.

Another aspect of the present disclosure is that the clamping force of the clamping mechanism is applied to the outer support surface of the main body of the adaptor to be transferred to the inner support surface to clamp the workpiece preferably by elastically deforming the main body.

Another aspect of the present disclosure is that for machining the workpiece the adaptor includes guiding elements. Alternatively, the adaptor system can be implemented which comprises the adaptor and guiding elements as described above. When receiving the workpiece, the position of the main body is axially maintained by adjusting the clamping forces applied to the outer support surface. The guiding elements receive and/or support the workpiece at a position inside and/or outside of the spindle in the axial direction and are configured to be moved together with the workpiece in the axial direction, preferably via frictional connection between the guide inner support surface and the workpiece.

Another aspect of the present disclosure that when pulling and/or pushing the workpiece along the axial direction the one or more guiding elements are coupled to the workpiece through a friction connection and are moved together with the workpiece, and the guiding elements are stacked together such that the one or more pins of one guide element are slidably moved to receiving sections of another guide element in the axial direction, and/or one or more hooks of the one guiding element are pushed and/or clamped into receiving section of another guiding element for preventing movement of the staked guiding elements in the axial direction. When the workpiece is further pulled or pushed from the back in the axial direction all the stacked guiding elements remains in the stacked position

In addition, the main body of the adaptor may have the receiving section similar to the guiding elements. Specifically, main body may comprise openings and holes on the surface orthogonal to the axial direction and facing the guiding element. With such configuration of the main body the pins of one guide element are slidably moved to receiving sections the adaptor in the axial direction, and/or one or more hooks of the one guiding element are pushed and/or clamped into receiving section of the main body of the adaptor.

The advantage of the claimed solution is that with the adaptor, according to the present disclosure it is possible to further improve the overall speed of the machining operations for the workpiece in the machine tool by avoiding a change between different clamping systems. In addition, the workpiece with an irregular cross-section can be reliably held by the adaptor clamped by the clamping mechanism.

### BRIEF DESCRIPTION OF DRAWINGS

Fig. 1a: Schematic drawing of the commonly used machine tool with spindle and clamping mechanism for clamping the workpiece.
Fig. 1b: Schematic drawing of the clamping system of the machine tool with an adaptor for holding the workpiece with an irregular cross-section according to the present embodiment.
Fig. 2: Schematic drawing of the clamping portion of the machine tool facing the axial direction.
Fig. 3a-3c: Exemplary structures of the adaptor according to the present disclosure.
Fig. 4a: Schematic drawing of the guiding elements of the adaptor system of the machine tool according to another embodiment of the present disclosure.
Fig. 4b: Schematic drawing of the side view on the guiding element.
Fig. 4c: Schematic drawing of the front view of the guiding element.
Fig. 5: Stacked and connected guiding elements together.
Fig. 6a: A conventional machine tool with a spindle and a clamping mechanism.
Fig. 6b: The machine tool with the guiding elements and the adaptor according to the second embodiment of the present disclosure.
Fig. 7a: Schematic drawings of a stage of pulling the workpiece held via adaptor and supported by the guiding elements.
Fig. 7b: Schematic drawings of an initial and final position in the adaptor system according to the second embodiment.
Fig. 8a: Commonly used elongated workpieces with high-symmetry cross-sections
Fig. 8b: Exemplary elongated workpiece with an irregular cross-section according to the present disclosure.
Fig. 9a, 9b: Another development of the present disclosure.

### DETAILED DESCRIPTION

In the following, preferred aspects and embodiments will be described in more detail with reference to the accompanying figures. Same or similar features in different drawings and embodiments are referred to be similar reference numerals. It is to be understood that the detailed description below relating to various preferred aspects and preferred embodiments are not meant as limiting the scope of the present disclosure.

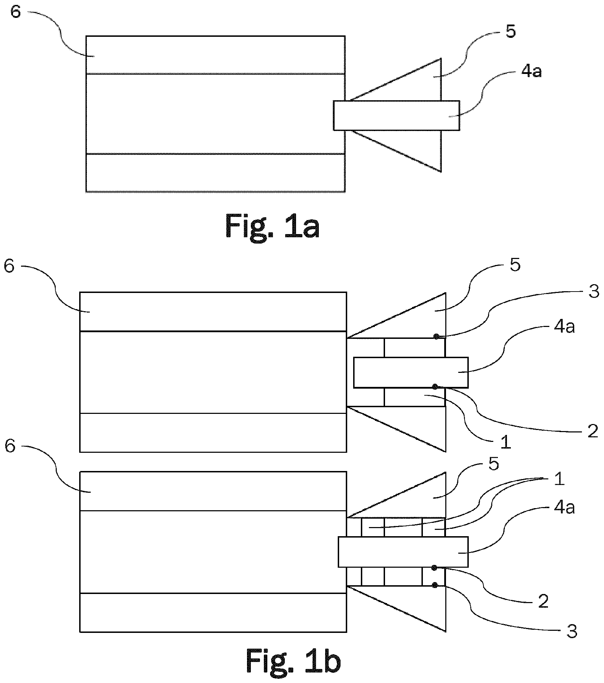

Fig. 1a shows a conventional collet assembly employed on a lathe with a spindle 6 and a clamping mechanism 5 such as, chuck, or collet, designed to clamp a workpiece 4a. The clamping mechanism 5 may include, for example, a conventional draw-in collet, a collet supporting a spindle nose and a hollow, cylindrical, collet adapter. The chuck is either tightened to apply clamping force to the workpiece 4a or the adaptor or the chuck can be untightened for allowing the workpiece 4a or the adaptor.

Fig. 1b shows an adaptor in a machine tool according to the preferred embodiment of the present disclosure. A spindle device of the machine tool is connected with the clamping mechanism 5, which applies a clamping force to an adaptor for supporting the long and/or elongated workpieces 4a. In addition, the adaptor can have at least several adaptor bodies which can be used for supporting the elongated workpiece 4a, wherein the adaptor bodies are located between the workpiece 4a and the clamping mechanism 5 in the direction orthogonal to the axial direction. The adaptor may be defined in some examples as additional structure to adapt the clamping mechanism 5, as the collet, of the lathe to the cross-sections of the workpiece 4a and to define the axis of turning for machining workpiece 4a.

The spindle 6 and the clamping mechanism 5 are commonly used units of the machine tool. For example, the collet/adapter assembly is part of a machine tool which may be a multi-axis turning machine, comprising a machine frame, a turret body rotatably supported on the machine frame, and a plurality of workpiece spindles arranged on the turret body. Each of the workpiece spindles being provided with a workpiece receptacle on one side of the turret body facing the machining space of the machine tool for receiving the respective workpiece 4a.

In a detailed view, a spindle device for use in a machine tool, particularly a lathe, is configured to receive an elongated workpiece 4a, including a spindle assembly including a spindle motor for driving spindle rotation of a workpiece spindle about the spindle axis of the spindle, and/or a rotation of the clamping mechanism 5 disposed coaxially with the workpiece spindle relative to the spindle axis/ the axial direction.

The clamping mechanism 5 is configured to receive an elongated workpiece 4a and or preferably to allow movement of the elongated workpiece 4a in the direction of the spindle axis, i.e. the axial direction.

The spindle 6 or a spindle assembly and the clamping mechanism 5 are preferably configured to connect to each other by a torque transmission connection disposed between the spindle 6 and the clamping mechanism 5, preferably along the spindle axis. Drive torque during acceleration or deceleration of spindle rotation driven by the motor is transmitted to the clamping mechanism 5 in synchronization with the drive acceleration or deceleration of rotation of the workpiece spindle.

In some machine tools the spindle 6 or the spindle assembly may include a workpiece spindle that can be used in a machine tool such as a lathe, for example, a single spindle lathe, a double spindle lathe, or a multiple spindle lathe. The spindle 6 may include a spindle housing that is arranged such that a spindle shaft is rotatably supported. Further, in order to rotationally drive the spindle shaft around the spindle shaft in the spindle housing, a built-in spindle driving device (for example, an electromagnetically driven spindle motor) is used (not shown).

Typically, the elongated workpiece 4a can be held by the spindle 6 in the hollow portion of the spindle shaft, and extends axially with respect to the spindle shaft.

On the front side of the spindle 6, the spindle 6 includes clamping mechanism 5 configured to clamp the workpiece 4a when necessary, for example during a machining process, and configured to clamp the adaptor. In the clamped state, when the clamping mechanism 5 clamps the workpiece 4a via the adaptor, the workpiece 4a is firmly fixed to the spindle shaft, and when the spindle driving device rotationally drives the spindle shaft around the spindle axis, the workpiece 4a rotates around the spindle axis, i.e., the axial direction.

Furthermore, in order to push or/and move workpiece 4a in the axial direction of the spindle axis or axial direction (Z is parallel to the longitudinal/axial direction), for example, the machine tool moves another part of workpiece 4a towards the machining area where it engages with a tool. To do so, the clamping mechanism 5 can be released, for example by actuating the clamping mechanism 5 to release the workpiece 4a.

For such a clamping function, the clamping mechanism 5 can be operated to clamp and unclamp (release) the workpiece 4a, which may be performed automatically, for example electronically, electromagnetically, pneumatically and / or hydraulically.

In a clamped state, the clamping mechanism 5 applies the clamping force to outer support surface 3 of the main body 1. Under the applied force the main body 1 elastically deforms and transfers the clamping force to the inner support surface 2 and to the workpiece 4a. The elastic deformation may result from decreasing the distances between slits and holes in the main body 1 which facilitate a transfer of the clamping force.

In a release state, the clamping mechanism 5 does not apply the clamping force or decrease the clamping force to the level that the main body 1 returns to the original shape from the elastic deformation under clamping force applied before. The outer support surface 3 may be in friction connection with the clamping mechanism in the release state.

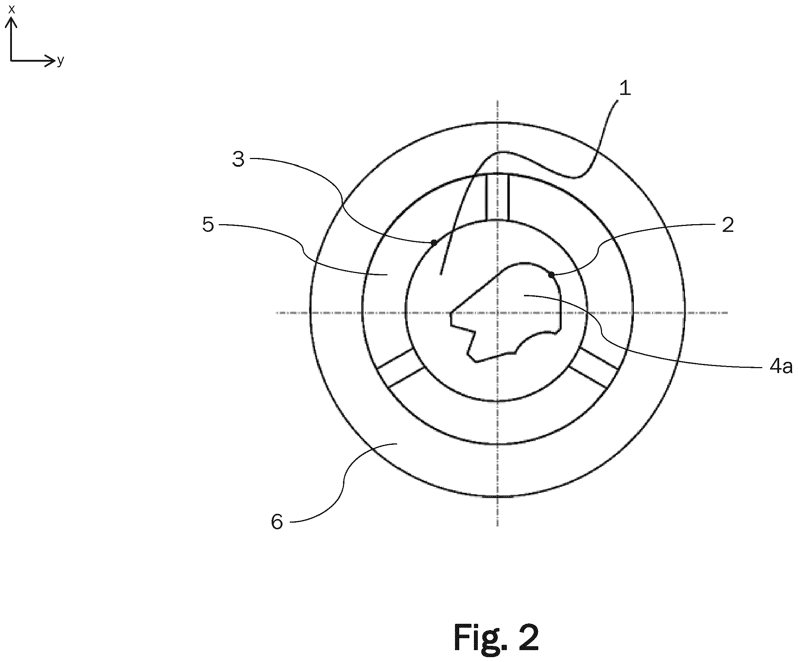

Fig. 2 shows a schematical drawing of the clamping mechanism 5, the adaptor, and the spindle 6 in a plane orthogonal to the axial direction. The spindle 6 of the machine tool is connected to the clamping mechanism 5. The adaptor has a main body 1 with a through hole 4 extending in the axial direction of the main body 1 which is adapted for receiving the workpiece 4a. The through hole 4 is forming an inner support surface 2 for receiving the workpiece 4a, the main body 1 further includes an outer support surface 3 which is an outer circumferential surface 3 of the main body 1.

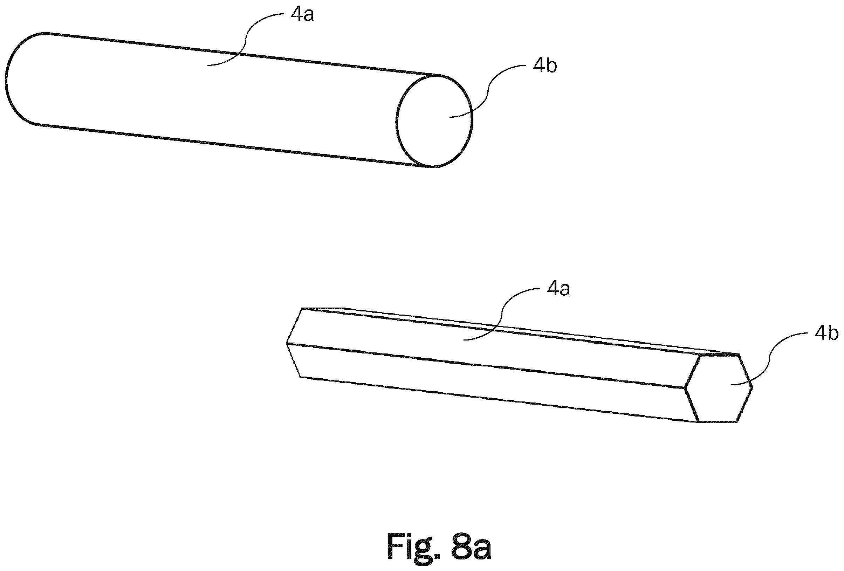

The adaptor is positioned between the workpiece 4a and the collet 5 in the radial direction. The outer support surface 3 of the main body 1 may have a common shape as conical or polygonal prism, as demonstrated for example in Fig. 8a, with the circular or polygonal cross-section in a surface orthogonal to the axial direction. As a result, the shape of the cross-section of the outer support surface 3 has a very high symmetry.

In addition, the friction coefficients between the outer support surface 3 and the inner support surface 2 may be different. Specifically, the friction coefficient of the inner support surface can be higher than the friction coefficient of the outer support surface 3.

The inner support surface 2 is adapted to receive the workpiece 4a with the irregular cross-section. The cross-section referred here is the cross-section orthogonal to the axial direction. The workpiece 4a with the irregular cross-section has a very low symmetry, low symmetry point group.

Generally, the irregular cross-section of the workpiece 4a may imply that the symmetry of the inner support surface 2 is smaller than the symmetry of the outer support surface 3. Specifically, if the outer support surface 3 has a maximum symmetry rotation operation of Cn rotation about a fixed point by multiples of the angle 360°/n, the inner support surface 2 has a maximum symmetry rotation operation Cn-1 or lower.

In order to clearly establish grounds for comparison the symmetries, in the present case, the symmetries of the outer support surface 3 and the inner support surface 2 can be compared, for example, by comparison the highest symmetry operation available for the cross-section of the outer support surface 3 with the highest symmetry operation available for the cross-section of the inner support surface 2.

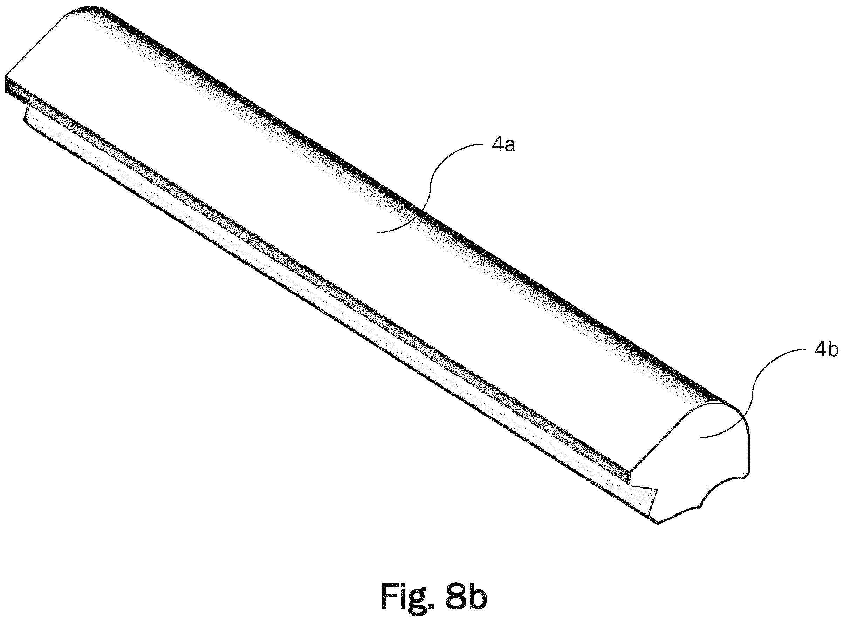

For example, the outer support surface 3 with the highest degree of operation as C6, which corresponds to a symmetry with regard to a rotation by 60° as relevant for the workpiece 4a in the down part of Fig 8a, is considered to have higher symmetry then the group with the highest degree of operation as C1, which corresponds to an identity operation of rotation by 360°, see the workpiece 4a of Fig. 8b.

Alternatively or additionally, according to another way, the symmetries of the inner support surface 2 and the outer support surface 3 cross-sections can be determined based on a comparison of the total number of symmetry operations for the cross-section of the outer support surface 3 orthogonal to the axial direction with the total number of symmetry operations for the inner support surface 2 cross-section orthogonal to the axial direction.

Furthermore, the second way to compare the symmetries can also be combined with the first way. For example, if the highest degrees of symmetry available for both the outer support surface 3 and the inner support surface are the same, then the comparison between the symmetries can be performed based on the total number of original symmetry operations. For example, the inner support surface 2 with only C2 symmetry and rotation by 180° has lower symmetry than the outer support surface 3 with one C2 symmetry and two mirror planes symmetries. Indeed, the situation above can be observed by comparing the symmetry of a general parallelogram with only one C2 operation available with the symmetry of a rectangle with a C2 operation and two mirror planes.

For example, the workpiece 4a with the irregular cross-section may have only one twofold axis of rotation and two nonequivalent mirror planes. Alternatively, the workpiece 4a with the irregular cross-section may have only a single reflection operation, which means that the figure (cross-section of the workpiece 4a) has only a single axis of bilateral symmetry.

The workpiece 4a with the irregular cross-section may be entirely asymmetric with regard to the axial direction. The asymmetry of the workpiece 4a with the irregular cross-section means that the cross-section of the workpiece 4a has the trivial group symmetry, C1, which contains only the identity operation, rotation by 360°.

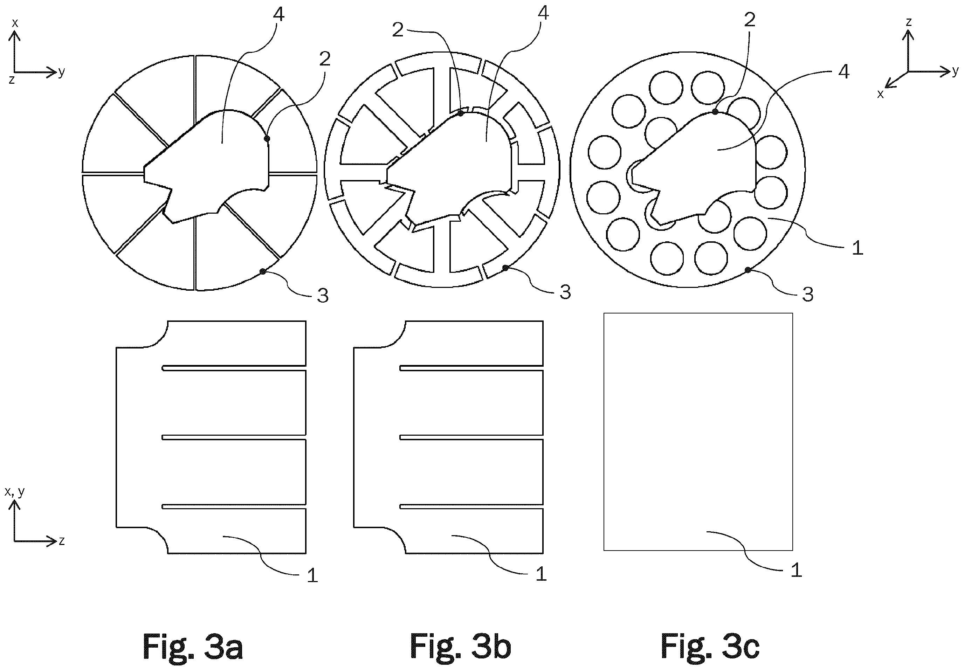

Figs. 3a-3c shows several examples of the adaptor structures according to the present disclosure. The main body 1 of the adaptor has holes and/or protrusions. Specifically, the protrusions and holes are helpful for transferring the clamping force applied to the adaptor from the clamping mechanism 5. In addition, slits and protrusions facilitate elastic deformation of the adaptor.

According to one configuration of the present disclosure, the main body 1 may have holes extended in the axial direction in the main body 1 (Fig. 3c). The holes can have a circular or substantially circular shape. Furthermore, the holes may have the same radius/diameter, or, alternatively, the holes can be divided into several groups of holes with different diameters/radiuses may be implemented in the main body 1. Based on different configurations of the adaptors, possible modifications for the adaptor. The holes can extend through the whole main body 1 in the axial direction, or they can extend to a certain point, certain length of the main body, for example up to 60-90% of the length of the main body 1 in the axial direction. The outer support surface 3 may remain constant in axial direction or be divided into two parts as described below.

According to some configuration of the present disclosure, the shape of the outer support surface 3 may remain constant in the axial direction, i.e., Fig. 3c. Alternatively, the shape of the outer support surface 3 of the main body 1 in the axial direction may be divided into, at least, the first part and second part. In the first part, the slits and/or holes are extended through the main body, but the slits or holes do not pass through the main body 1 completely, and the shape of the outer support surface 3 is constant along axial direction. For example, the length of the first part of the adaptor can be up to 60-90% of the length of the main body 1 in the axial direction.

In the second part of the main body 1, the size of the outer support surface 3 can gradually decrease, Figs. 3a and 3b. For example, in case of the circular outer support surface 3 change of size may be associated with a change of the diameter of the outer support surface cross-section.

According to another configuration of the present disclosure, the main body 1 may comprise slits/protrusions that pass from the outer support surface 3 to the inner support surface 2, Fig. 3a. The slits may be equally distributed across the main body 1. The slits can be distributed may be radially displaced from each other on the same angle between 0-120°, preferably between 10-60°. The higher number of the slits may be helpful with regard to the adaptation of the transfer of the clamping force from the outer support surface 3 to the inner support surface 2 to the workpiece 4a with the irregular cross-section. In another example, each slit may be radially displaced from the other at 45°, Fig. 3a.

Furthermore, slits may be displaced from each other on different angles in radial direction. In addition, parts of the main body 1 formed by the slits and outer support surface 3 and inner support surface 2 may have different size or shape.

Accordingto another configuration of the present disclosure, a combination of holes and protrusions can be implemented in the main body 1, Fig. 3b. In order to further increase the transfer of the clamping force applied from the clamping mechanism 5 to the workpiece 4a. For such a configuration, it is important to maximize the area of the outer support surface 3 in contact with the clamping device and the area of the inner support surface 2 in contact with the potential workpiece 4a (Fig. 3b). Thus, only small slits may be required to be introduced with regard to the outer support surface 3 and the inner support surface 2, wherein the holes of different sizes can be implemented between the outer support surface 3 and the inner support surface 2. Specifically, the structure of the main body 1 may be divided in a plurality of T-shaped radially distributed portions. The upper part of the T-shaped portion is defined by the outer support surface 3 and can have a circular or straight shape. A base part of the "T"-shaped portion is a straight part connected outer support surface 3 and the inner support surface. A lower part of the T-shaped portion has a shape defined by the inner support surface 2 and adapted to hold a part of the workpiece 4a with the irregular cross-section.

The slits and holes can extend to a certain point, certain length of the main body, for example up to 60-90% of the length of the main body 1 in the axial direction. The slits can be distributed may be radially displaced from each other on the same angle between 0-120°, preferably between 10-60°. Alternatively, slits may be displaced from each other on different angles in radial direction.

Furthermore, the shape of the outer support surface 3 may remain constant in the axial direction, i.e., Fig. 3a, or the shape of the main body 1 in the axial direction can be divided into the first and second parts. In the first part, the slits and/or holes are extended through the main body, but the slits or holes do not pass through the main body 1 completely, and the shape of the outer support surface 3 is constant along axial direction. In the second part of the main body 1, the size of the outer support surface 3 can gradually decrease. For example, in case of the circular outer support surface 3 change of size may be associated with a change of the diameter of the outer support surface cross-section.

Furthermore, in case when the main body 1 is divided in the first and the second parts, the transition between the first part and the second part of the main body 1 may be abrupt or gradual. The shape of the first part of the main body 1 is expected to have a shape of commonly used workpieces as polygonal prism or conical, for example Fig. 8a, wherein the shape of the second part can has different shape with smaller axial length in comparison to the first part, as long as the clamping system 5 is not affected by the second part of the main body 1.

Furthermore, the main body 1 may be configured to transmit the machining torque/forces from the collet (clamping mechanism 5) to the machined part, wherein the material of said main part preferably is a metal alloy, preferably steel, that can give the proper rigidity to the body. For example, Fig. 3a shows a rigid solution based on using full material (except for the cuts for the clamping deformation), Moreover, Fig. 3b and 3c show a solution with less rigidity. Specifically, the adaptors with less rigidity can be used in case of low cutting forces, and/or for low precision machining. In this case also polymeric material can be preferrable.

The adaptor according to the present disclosure can also be made of metals, a combination of metals or polymer materials based on the type of workpiece 4a to be machined and the required operations. Accordingly, in a further preferrable development the material of the adaptor is selected based on the required clamping force and the desired workpiece machining accuracy. Moreover, preferably it may also be possible to combine metal and polymeric materials to a hybrid material for the adaptor (and/or the main body) so that the clamping force to be applied via the adaptor and specifically the elasticity of the adaptor can be selected appropriately for the application purpose (depending preferably on factors including: material of the workpiece to be machined; type of machining operations; required machining accuracy)

The adaptor 1 can be implemented in the field of automatic CNC (Computerized Numerical Control) turning lathes, and more particularly in combination with chucks and collet guides used to retain or position workpieces during the cutting operations. However, with some further modifications the disclosure related to an adaptor may be applied to a lathe capable of performing Swiss-type machining.

An adaptor system can be also implemented with one or more guiding elements 7. The adaptor system is highly suitable for the Swiss-type lathe or machines tools in which the workpiece 4a is moving in axial direction during the machining operations.

The lathes known as the Swiss-type sliding headstock automatic lathe, utilizes a non-stationary headstock and a chuck which grips, rotates, and feeds the workpiece stock longitudinally, in the axial direction, while the cutting bit remains stationary in the longitudinal direction and moves only in the radial direction to machine the workpiece 4a. The Swiss-type sliding headstock lathe utilizes a stationary guide bushing or clamping mechanism 5 in front of and aligned with the sliding headstock chuck to guide and support the workpiece stock. Different machining operations dictate which type of automatic CNC lathe is preferred for producing a particular part. The Swiss-type sliding headstock lathe is preferred for production of long, small diameter parts such as needles, since all cutting occurs near the guide bushing end where the workpiece 4a is supported against the deflective forces of the cutting bit by the guide bushing and the opposite end of the workpiece 4a is supported by the sub-spindle.

As a result, it is required to support the workpiece 4a with the irregular shape not only in the part of clamping mechanism 5 but also in the spindle 6. Thus, further guiding elements 7 adapted for the workpiece 4a may be placed in the spindle for holding the received workpiece 4a.

The guiding element 7 or an additional element is configured to adapt the clamping mechanism 5, collet, to workpiece 4a/bar cross-section and to define axis of turning part.

When the workpiece 4a/bar is loaded into the spindle 6, the position of the guiding element 7/additional element is axially maintained by the clamping mechanism 5/clamping system.

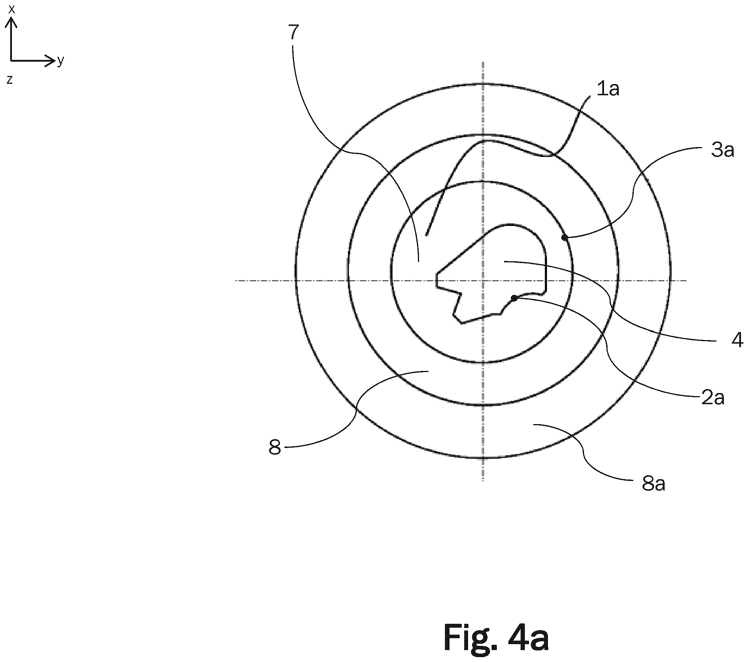

The guiding element according to the second embodiment is shown in more detail in Fig. 4a to 4c.

An adaptor system can be mounted to an automatic CNC turning lathe with a sub-spindle which allows the lathe to perform Swiss-type turning. It is a further object to provide such a device which does not require extensive alteration of the chuck of the automatic CNC lathe, and which allows the radial jaws of the automatic CNC lathe to operate unhindered.

In the adaptor system, the clamping mechanism 5 connected to the spindle 6 clamps the adaptor 1. One or more guiding elements 7 are configured to receive and to hold a long and/or elongated workpiece 4a. The adaptor system has one or more guiding elements 7 wherein each guiding element comprises a guide body 1a, a guide outer support surface 3a, a guide inner support surface 2a and a through hole extending along the axial direction through the guide body 1a. The guide inner support surface 2a is configured to receive the workpiece 4a. The guide outer support surface 3a is an outer circumferential surface of the guide body 1a. The shape of a cross-section of the guide outer support surface 3a and the guide inner support surface 2a are different.

Fig. 4a shows the cross-section of the spindle with the guiding element 7 viewed in the axial direction. Parts 8 and 8a are components of the spindle. The guiding element 7 may have a similar shape to the adaptor. But preferably a different friction coefficients between the guide inner support surface 2a and the guide outer support surface 3a. The guiding outer support surface 3a can be identical to the shape of the outer support surface 3 of the adaptor, in particular has a cylindrical or polygonal shape extending along the axial direction. However, since one or more guiding elements 7 are not clamped by the clamping mechanism 5 but are installed in the spindle, the requirement for the shape of the guide outer support surface 3a can be different from the shape of the outer support surface 3. In particular, the guiding outer support surface 3a may be circular, or may have different diameter or size from the outer support surface 3 from the adaptor.

Some configurations of the machine tool may include the spindle 6 capable of providing the workpieces 4a through bar feeding along the central axis of the spindle, i.e. in the axial direction. The provided workpiece 4a can be machined on the front end side by one or two tools of respective tool carrier assemblies of the machine tool or, for example, by the respective tools of the turret units located vertically above or below the horizontal axis.

In general, it is to be noted that workpieces 4a can be loaded into the machine tool by a workpiece loading apparatus such as a bar loader, bar feeder, and/or a handling robot. Machined workpieces 4a can be removed by an unloading apparatus, e.g. by a/the handling robot.

In case of the elongated workpiece 4a with the substantially the same cross-section elongated orthogonal to the axial direction. The shape of the guide inner support surface 2a can be identical to the shape of the inner support surface 2. Furthermore, the guiding element 7 may have a shape that the guide inner support surface 2a and/or the guide outer support surface 3a are constant along the axial direction.

Also, the guiding elements 7 are movable along the axial direction and can be coupled to the workpiece 4a through friction. In addition, the guide outer support surface 3a preferably remains constant along the axial direction.

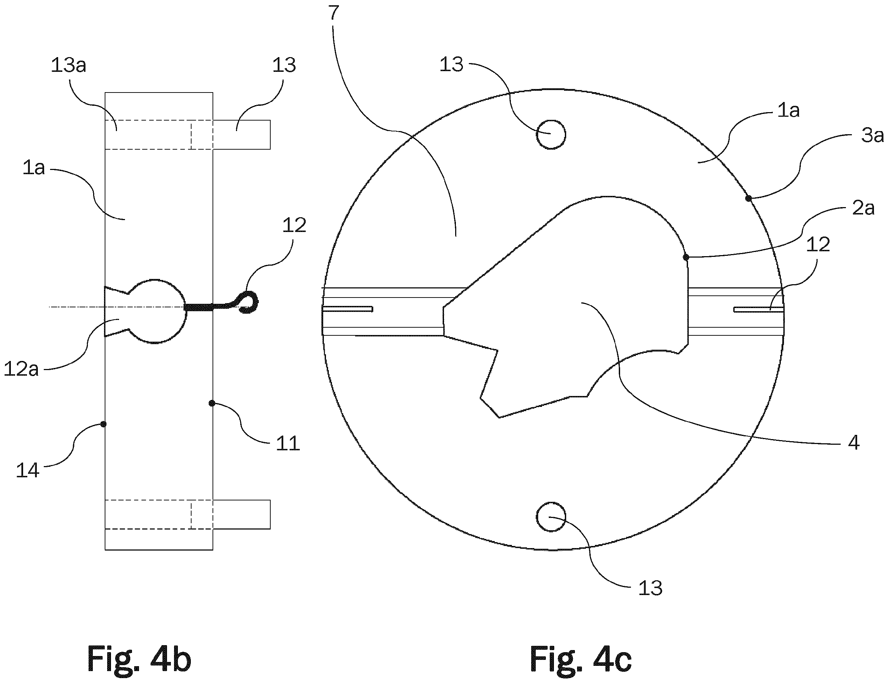

Figs. 4b and 4c show further aspects of the guiding element 7. Specifically, the guiding element comprises different connection means located on different sides of the guide body 1a. The guide body 1a has a guide first side 11 as a connection side with connection means for connecting with another guiding element 7 and a guide second side as a receiving side with holes and/or openings for receiving the connection means of another guiding element 7. The connection means can also be interlocking means.

For example, the guiding element 7 of Fig. 4c may have two pins 13 located above and below the hollow part 4 of the guide body 1a and are extended in the axial direction. The pins 13 are placed on the guide first side 11. In addition, two holes 13a adjacent to the pins 13 are placed on the guide element second side 14.

The position of the pins 13 and the holes 13a are chosen with regard to when the guiding elements 7 are stacked together, wherein by stacking the guide elements 7 together the pins 13 of one guide element 7 are slidably moved into the holes 13a of another guide element 7 in the axial direction.

By default, during the machining of the elongated workpiece, the workpiece 4a will be pushed or pulled toward the clamping mechanism 5 and the adaptor. Thus, the guide element first side 11 of the guiding element 7 is a surface of the guide body 1a orthogonal to the axial direction and located relatively closer to the adapter and/or clamping mechanism 5, than the guiding element second side 14 which is another surface of the guiding body 1a orthogonal to the axial direction.

Additional elements to guide support the bar inside the spindle 6 and the bar loader. Elements are non-rotating vs the bar, due to the shape coupling. Elements are coupled to the bar through friction. The axial position is maintained during the axial movement of the bar. They stops the axial movement when touch another element. When the elements are staked together there is a system that maintain them in the axial position, so it is possible to remove the elements together in one shoot.

With this configuration of the connection means/interlocking means the guiding elements can be stacked with each other at the end of the path near the clamping mechanism 5. Also, by pushing the pins 13 in the adjacent holes 13a the orientation of the guiding elements 7 with regard to each other can be properly maintained.

Furthermore, the connection means can have one or more hooks 12 located on the guiding element first side 11. For each hook a straight shaft section of the hook 12 is extended in the axial direction and bended part of the hook is bended in the transversal direction orthogonal to the axial direction. For example, Fig. 4c shows the guiding element 7 with two hooks 12 which are schematically shown at the left and right sides from the through hole 4 of the guiding element 7.

Similar, to the position of the holes 13a the guide body 1a has one or more openings 12a at the guiding element second side 14. In Fig. 4c, precisely two openings are schematically demonstrated on left and right sides from the through hole 4 of the guide body 1a. The openings 12a are provided at an opposite position from the interlocking means as hooks at the guide element first side 11.

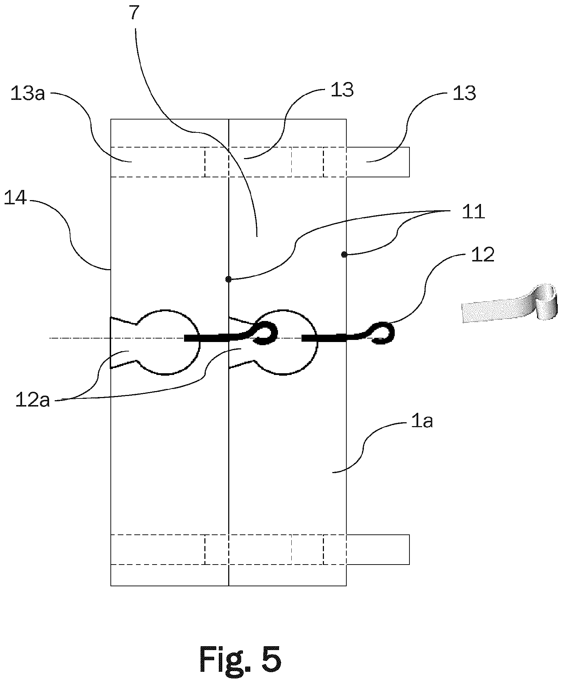

When the guiding elements 7 are stacked together the hooks (or interlocking means) of the one guiding element 7 are pushed and/or clamped into the openings 12a of an adjacent guiding element 7 for preventing movement of the staked guiding elements 7 in the axial direction after interlocking, as demonstrated in Fig. 5. Specifically, when the guiding element 7 are moved and connected with another guiding element 7 the pins go in the adjacent holes 13a of another guiding element, and the hooks 13 of one guiding element 7are connected to the opening of another guiding element.

The opening 12a of the guiding elements may have different shapes which can be clamped with the hooks 12. For example, according to the Figs. 4c and 5 the openings may have shape of keyhole, specifically in the shape of a circle with a trapezoid having a width smaller than the diameter of the circle. Specifically, the circle and the trapezoid are combined together as demonstrated in Figs. 5, 4c wherein the small parallel side of the trapezoid is a connection point between the circle and the trapezoid. Alternatively, the opening 12a with a shape of the keyhole can have the shape a circle combined with a rectangle having a width smaller than the diameter of the circle projecting from the bottom.

The shape of the openings referred above is shown for the X-Z plane, wherein the Z is the axial direction and X is the axis orthogonal to the axial direction, for example as demonstrated in Fig. 4a.

Furthermore, the opening 12a with the keyhole profile may be extended through the main body along one of the axis orthogonal to the axial direction. For example, according to Figs. 4b and 4c, each opening with the keyhole shape is passing through the guide outer support surface 3a of the guide body 1a to the guide inner support surface 2a.

With the configuration of the guiding elements 7 without the pins 13 and the holes 13a, the stacked guiding elements can be disconnected either by pulling some of the stacked guiding elements in the axial direction or by sliding several guiding elements 7 in the Y direction orthogonal to the axial direction and parallel of the direction in which the openings passing through the guide body 1a.

Furthermore, for the simplicity of the description of the guiding elements 7 the guiding element first surface 11 and the guiding element second surface are demonstrated orthogonal to the axial direction. However, both first and second surface of the guiding element 7 can have some inclination with in relation to the axial direction, for example it can be the same inclination for the guide element first and second surfaces. In this configuration of the guiding pieces the orientation of hooks 12 and pins 13 on the guiding element first side are extended in the axial direction.

Alternatively, the guiding element first side 11 and the guiding element second side 14 may have different inclinations. However, for this configuration the guide element first side 11 surface of one guiding element 7 may have a surface connection with the guiding element second side 14 of another guiding element 7. In other words, the sum of angle between the axial direction and the guide element second side 14 with angle between the axial direction the guide element first side 11 of another guiding element 7 is equal to 180°.

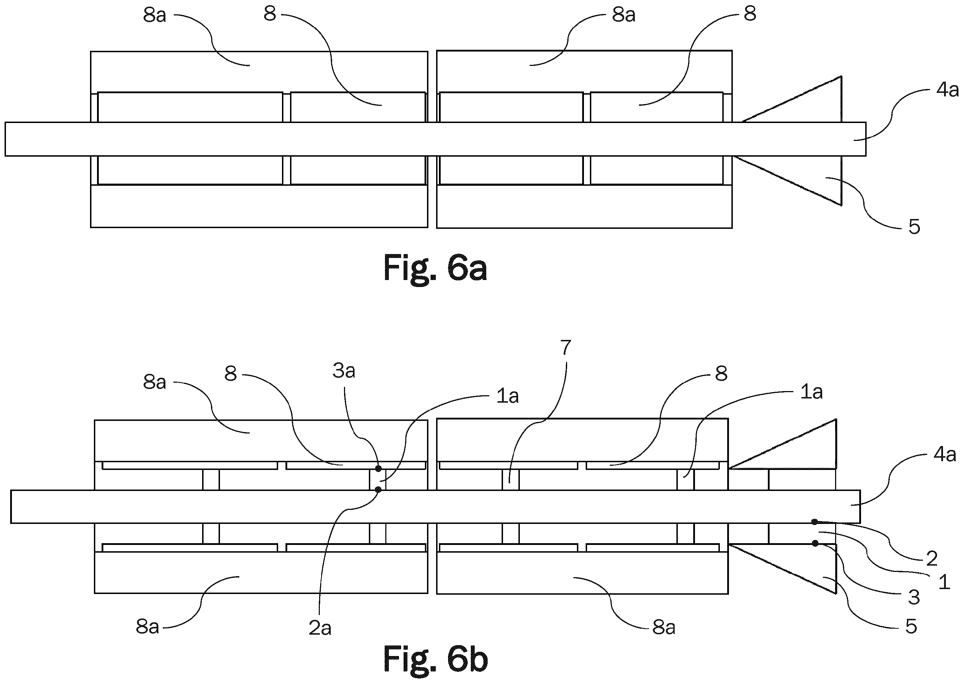

Fig. 6a shows a standard system with the spindle 6 and/or bar loader with the clamping mechanism 5. The workpiece 4a can be pushed forward toward the clamping mechanism 5 or can be pulled from the clamping mechanism 5 in the axial direction. The parts 8 and 8a are standard parts of the spindle 6 or the bar loader, wherein the part 8 can be any holding mechanism adapted for hold the workpiece 4a with the regular cross-section as circular or polygonal as described above. Part 8 may be an outer casing of the spindle or the bar feeder.

Fig. 6b shows the adaptor system according to the present disclosure. Specifically, the spindle or bar feeder with the clamping mechanism 5 comprises further guiding elements 7 and the adaptor for workpiece 4a with the irregular cross-section. The adaptor is located between the workpiece 4a and the clamping mechanism 5 attached to the spindle 6 or the bar feeder. A plurality of guiding elements 7 are positioned inside the spindle 6 or the bar feeder facing the axial direction. The guide outer support surface 3a is in contact with the holding mechanism 8 and the guide inner support surface 2a is in friction contact with the workpiece 4a with the irregular cross-section. The guiding elements 7 can move in axial direction along with the workpiece 4a Parts 8 and 8a of the spindle 6 or the bar feeder denotes the standard parts of these mechanisms used in the art.

The sliding forces between the guide body 1a and the workpiece 4a, and/or between the guide body 1a and the part of the spindle 8 (Fig. 6), may be different. Specifically, the different sliding forces come from e.g. different coupling tolerances between the guide body 1a and the workpiece 4a and/or between the guide body 1a and the part of the spindle 8 (see Fig. 6). When a small interference between the guide body 1a and the workpiece 4a is created, the workpiece 4a, by pressing on the guide inner support surface 2a of the guide body 1, leads to the formation of a small gap between the guide body 1a and the part of the spindle 8 (see Fig. 6), due to e.g. different friction forces.

As a result, the guiding elements may slide in the axial direction along the movement of workpiece 4a.

The guide body 1a may be made of some polymeric materials that can be deformed to adapt to (or clamp) the workpiece 4a, which is e.g. made from metal alloy, creating the proper coupling friction force between the guide body 1a and the workpiece 4a.

Alternatively, instead of polymeric material, the guiding element 7 may be made of a metal alloy (steel, bronze, etc.) that, with macroscopic deformation, creates a preload between the guide body 1a and the workpiece 4a.

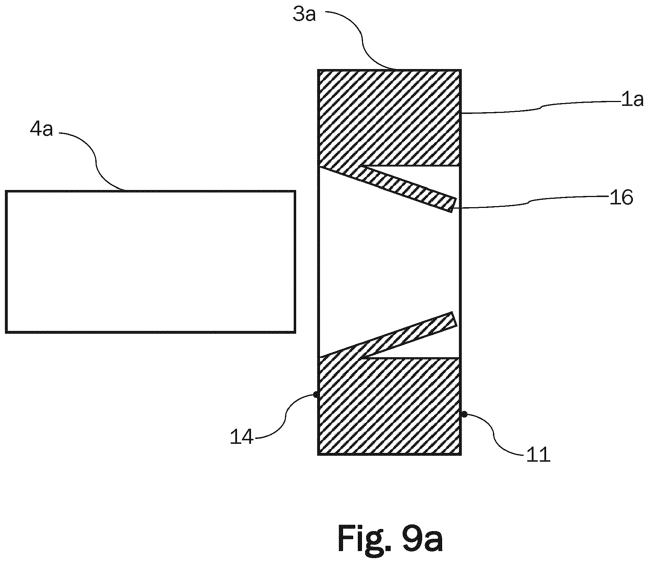

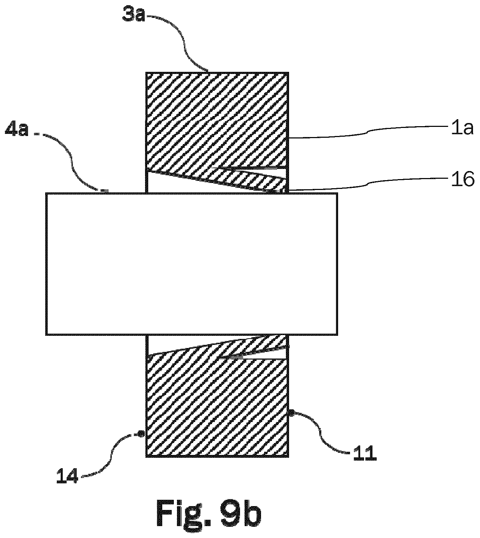

With this alternative, when the guiding element 7 is made from metal, the guide body 1a may further comprise a coupling part 16 (or elastic pushing- part; or a plurality of flat spring parts extending from the guide body 1a inwards in the direction of the body-center) as shown in Figs. 9a and 9b. The coupling part 16 of the guiding element 7 may extend from the guide inner support portion 2a in the direction to the center of the hollow portion 4 at a certain (predetermined) angle to the axial direction (in a preferrable example 30 degrees). The coupling portion 16 may be configured to protrude from the part of the guide inner support surface 2a near the guide element second side 14. The coupling part 16 may be configured to be attached to (an end portion of) the receiving part of the guide body 1a for the workpiece 4a and extending in the direction to which the workpiece is transferred, for example, to the machining area. The coupling part 16 may be one or more metal brackets welded to the guide body 1a.

The angle between the coupling part 16 and the axial direction may be between 0° and 50°. Preferably, between 30° and 10°. In an advantageous development the length of the projection of the coupling part 16 in the axial direction does not exceed the distance between the guide element second side 14 and the guide element first side 11 or a length of the guide body 1a. The coupling part 16 is therefore configured to extend in the axial direction of the guide body 1a. Furthermore, when the workpiece 4a is received by the guide body 1a, the coupling part 16 is pressed by the workpiece 4a, and the length of the projection of the coupling part 16 pressed by the workpiece 4a in the axial direction does not exceed the distance between the guide element second side 14 and the guide element first side 11 or a length of the guide body 1a. Moreover, in an advantageous development the coupling part 16 is a ring-shaped and more particular a funnel-shaped spring part attached with the outer circumference surface to the inner surface of the guide body 1a. In addition, this particular design can also be used for the configuration of the main body 1 having a funnel-shaped spring attached with the outer circumference surface to the inner surface of the main body 1. Moreover, in a further development the spring constant of the main body spring may be different the spring constant of the guide body spring.

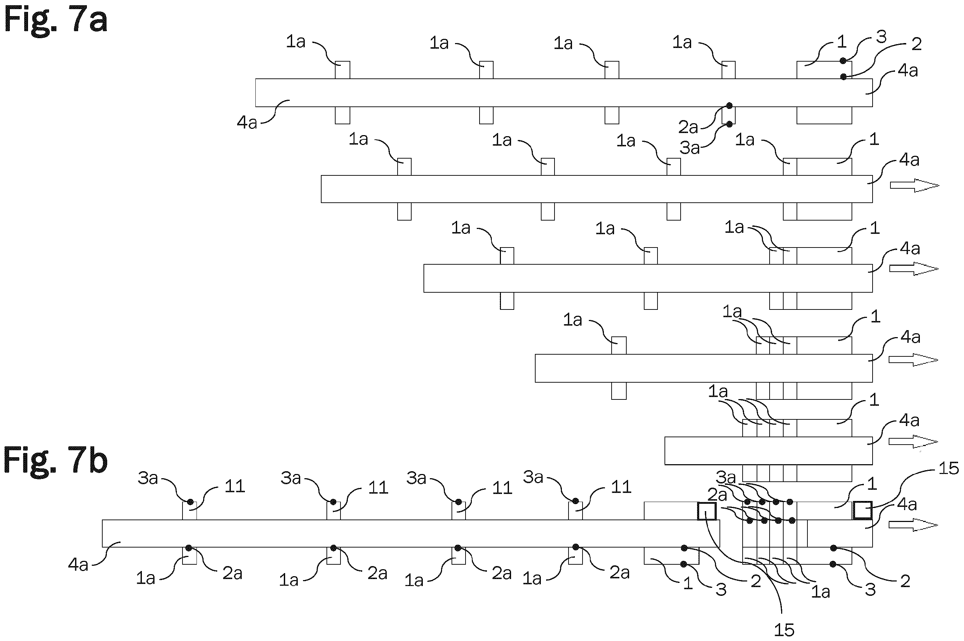

The process of machining the workpiece 4a with the adaptor system of the machine tool is demonstrated in Figs. 7a and 7b. The workpiece 4a is received by the spindle 6 and/or the bar loader of the machine tool. The guiding elements 7 (wherein each guiding element comprises a guide body 1a, a guide outer support surface 3a, a guide inner support surface 2a and a through hole extending along the axial direction through the guide body 1a) can be placed substantially at the same distances from each other across the workpiece 4a. Alternatively, the guiding elements can be placed on different distances from each other in the axial direction. The main body 1 of the adaptor is coupled to the chuck or clamping mechanism 5 via a friction and/or form-fitting connection at the outer support surface 3 wherein a shape of the cross-sections orthogonal to the axial direction of the outer support surface 3 and the inner support surface 2 are different.

During the operation, the workpiece 4a of the machine tool is pulled or pushed from the back in the axial direction as demonstrated in Fig. 7a. A plurality of guiding elements 7 are connected to the workpiece 4a via e.g. friction and, thus, move with the workpiece 4a. While the workpiece 4a is moving along the axial direction, the guiding element 7 moves to the main body 1 of the adaptor and is stopped by the adaptor. During axial movement of the workpiece 4a/working part, the adaptor stays static in its axial position because of an external constrain such as a stopper 15. For example, a specific mechanism as a stopper 15 Fig. 7b can be used to stop the adaptor during the movement of the part. After the feeding operation, the clamping mechanism 5 may clamp the adapter and the stopper 15 can be removed. The stopper can also be returned for the next feeding operation. Alternatively, the axial movement of the adaptor can be prevented if the friction coefficient of the outer support surface 3 is higher than the friction coefficient of the inner support surface 2.

The movement of the guiding elements may be stopped by the main body 1 of the adaptor, see Fig. 7a. The following guiding elements 7a continue to move along axial direction and the next guiding element arrives at the guiding element stacked to the main body 1 and the interlocking means of the one guiding element pass to the receiving section of another guiding element 7. A step-by-step process of connection of guiding element 7 together is shown step by step in figure 7a, wherein the initial distribution of the guiding elements 7 of the machine tool and the final position of the stacked guiding elements 7 together is shown at Fig 7b.

In step 1 of Fig. 7a the feeding operation starts and the workpiece 4a is pushed from the back or pulled forward in the axial direction. The clamping mechanism is in an unclamped state but in contact with the outer support surface 3 of the main body 1 of the adaptor. The movement of the main body 1 in the axial direction is prevented by the stopper 15 (not shown) and/or by the difference in friction coefficients between the outer and inner support surfaces of the main body 1. The other guiding elements 7 are moved in the axial direction along with the workpiece 4a via the friction connection with the workpiece 4a. The guiding elements 7 may be counted from the guiding element 7 closest to the main body as the first guiding element and the furthest guiding element 7 from the main body 1 is the fourth guiding element, in the present example.

In step 2 of Fig. 7a, during the feeding operation the first guiding element moves in the axial direction (feeding direction e.g. in the axial direction towards the main body 1) till it stacks with the main body 1, which prevents the further axial movement of the first guiding element. The other guiding elements 7 keep moving in the axial direction with the workpiece 4a.

Based on different structures of the main body 1, the interlocking means of the first guiding elements can move in the receiving section of the main body 1 which is similar/identical to the receiving section of the guiding element 7. However, according to the different configurations of the present disclosure, the adaptor may have a configuration without the receiving section and the first guiding element does not have interlocking means for stacking with the main body. In such a configuration all guiding elements 7 will be stacked with each other at the end of the feeding operation and can be removed together.

In some other configuration of the present disclosure, the axial movement of the guiding element can be stopped by an external constrain as stopping mechanism (not show) which is placed between the first guiding element and the main body 1.

In step 3 of Fig. 7a, during the feeding operation the second guiding element moves in the axial direction till it comes in contact with the first guiding element. The interlocking means of the second guiding element passes to the receiving section of first guiding element which enables stacking of the guiding elements 7. The other guiding elements 7 keep moving in the axial direction along with the workpiece 4a.

In step 4 of Fig. 7a, during the feeding operation the third guiding element moves in the axial direction until it comes in contact with the second guiding element. The interlocking means of the third guiding element passes to the receiving section of second guiding element which enables stacking of the guiding elements 7 with each other. The fourth guiding element keeps moving in the axial direction with the workpiece 4a.

In step 5 of Fig. 7a, during the feeding operation the fourth guiding element moves in the axial direction until it comes in contact with the third guiding element. The interlocking means of the fourth guiding element passes to the receiving section of third guiding element which enable stacking of the guiding elements 7 with each other. As a result, all the guiding elements 7 are stacked with each other and with the main body 1 in the example of Fig. 7a.

A configuration of the adaptor system with the guiding elements 7 with external constrain, i.e. stopper 15, is demonstrated in Fig. 7b. Specifically, Fig. 7b demonstrates an initial/first step of the feeding operation and the final step of the feeding operations in which all the guiding elements 7 are stacked with each other and may be with the main body 1. All the steps described in relation with Fig. 7a can be applied to Fig. 7b.

Furthermore, the main body 1 may have the receiving section similar to the guiding element 7. Specifically, the surface of the main body 1 orthogonal to the axial direction and facing the guiding elements may have openings 12a and the holes 13a with the same limitations as in the guiding elements 7 described above. Therefore, the interlocking means of one guiding element can be pushed and/or clamped into the openings of the main body 1 for preventing movement of the staked guiding elements 7in the axial direction after interlocking.

The embodiments above show the general principles of the disclosure. The various combinations of embodiments and teachings can be implemented together. Furthermore, the parts and modifications of one embodiment can be applied to another embodiment. In addition, various combinations of the modifications within the same embodiment can be performed by the skilled person in view of the disclosure of the present application.

The words of a collet, a chuck and a clamping system, and a clamping mechanism have been used interchangeably in the application, wherein both the collet and the chuck are examples of the clamping mechanism. Thus, the wording used can be interchanged without affecting the meaning of the words.

In addition, the wording of a guiding element, an additional element, or an element has the same meaning. Also, wording of a workpiece, an elongated workpiece, a bar has the same meaning. Also, the wording of an adapter or an adaptor has the same meaning and can be used interchangeably.

### Reference signs List

1 - main body
1a - guide body
2 - inner support surface
3 - outer support surface
2a - guide inner support surface
3a - guide outer support surface
4 - hollow portion
4a - elongated workpiece (workpiece)
5 - collet (clamping mechanism)
6 - spindle
7 - guiding element
11 - guide element first side (guiding element first side)
12 - hook
12a - opening
13 - pin
13a - hole
14 - guide element second side (guiding element second side)
15 - stopper (external constrain)
16- coupling part

## Claims

1. An adaptor for supporting a workpiece (4a) in a machine tool, in particular a lathe,
wherein the adaptor has a main body (1) with a hole (4) extending along an axial direction of the main body (1),
the hole (4) is forming an inner support surface (2) for receiving the workpiece (4a),
the main body (1) further includes an outer support surface (3) which is an outer circumferential surface (3) of the main body (1), and
the main body (1) is configured to be inserted into a clamping mechanism (5) of the machine tool and to be coupled to the clamping mechanism with the outer support surface (3),
wherein the shape of the cross-section of the outer support surface (3) is different from the shape of the cross-section of the inner support surface (2), and
the cross section of the inner support surface (2) is preferably constant along the axial direction.

2. The adaptor according to claim 1,
wherein the hole (4) extending along the axial direction through the main body (1) is a through hole, and/or
wherein the inner support surface (2) has an irregular cross-section and the outer support surface (3) has a regular cross-section.

3. The adaptor according to claim 1,
wherein the cross-section of the outer support surface (3) orthogonal to the axial direction has a higher symmetry than the cross section orthogonal to the axial direction of the inner support surface (2).

4. The adaptor according to any of the preceding claims,
wherein the outer support surface (3) has a cylindrical or polygonal shape extending along the axial direction, and
wherein the shape of the cross section of the inner support surface (2) matches a cross-section of the received workpiece (4a) and has preferably an irregular shape.

5. The adaptor according to any of the preceding claims,
wherein the cross-section of the inner support surface (2) is asymmetric about an axis orthogonal to the axial direction.

6. The adaptor according to any of the preceding claims,
wherein the main body (1) has holes and/or protrusions and is adapted to transfer a clamping force applied to the outer support surface (3) to the inner support surface (2) to clamp a workpiece (4a) and/or
wherein the surface roughness of the outer support surface (3) is different from the surface roughness of the inner support surface (2).

7. The adaptor according to any of the preceding claims,
wherein the adaptor has at least two of the main bodies (1) which are configured to be spatially displaced from each other along the axial direction when received in the clamping mechanism (5), and
the cross sections of the inner support surfaces (2) of the two main bodies (1) have the same shape and are configured to slidably receive the workpiece (4a) having an irregular cross-section.

8. An adaptor system comprising an adaptor according to any of the preceding claims and one or more guiding elements (7),
wherein each guiding element (7) comprises a guide body (1a), a guide outer support surface (3a), a guide inner support surface (2a) and a through hole extending along the axial direction through the guide body (1a),
wherein the guide inner support surface (2a) is configured to receive the workpiece (4a) and the guide outer support surface (3a) is an outer circumferential surface of the guide body (1a), and
wherein the shape of a cross-section of the guide outer support surface (3a) and the guide inner support surface (2a) are different.

9. The adaptor system according to the previous claim,
wherein the one or more guiding elements (7) are movable along the axial direction and configured to be coupled to the workpiece (4a) through friction, and
wherein the guide outer support surface (3a) preferably remains constant along the axial direction.

10. The adaptor system according to claim 8 or 9,
wherein at least one, preferably each, guiding element (7) comprises connection means, and
the one or more guiding elements (7) are configured to connect, in particular by interlocking, with the main body (1) of the adaptor or adjacent guiding elements (7) through the connection means, when moved axially along with the workpiece.

11. The adaptor system according claim 10,
wherein the connection means has one or more pins (13), and
the guide body (1a) has one or more holes (13a),
wherein the holes (13a) are located at a guide second side (14) of the guide body (1a),
wherein pins (13) are extending along the axial direction, and
wherein by stacking the guide elements together the pins (13) of one guide element are slidably moved into the holes (13a) of another guide element in the axial direction, and
a guide first side (11) and a guide second side are side surfaces of the guide body orthogonal to the axial direction.

12. The adaptor system according to claims any of claims 8 to 10,
wherein the connection means has one or more interlocking means and preferably hooks (12), and
the guide body (1a) has one or more openings (12a),
wherein the interlocking means are arranged at a guide element first side (11) and extend along the axial direction,
wherein one or more openings (12a) are provided at a guide element second side (14) at an opposite position from the interlocking means at the guide element first side (11),
wherein when the guiding elements (7) are stacked together the interlocking means of the one guiding element (7) are pushed and/or clamped into the openings (12a) of an adjacent guiding element (7) for preventing movement of the staked guiding elements (7) in the axial direction after interlocking,
wherein the guide element first side (11) and the guide element second side are side surfaces of the guide body orthogonal to the axial direction.

13. A machine tool for machining a workpiece comprises:
a spindle (6) for rotating the workpiece (4a) around the axial direction,
a clamping system comprising a clamping mechanism (5) and an adaptor,
wherein the clamping mechanism (5) is connected to the spindle (6) and applies clamping force to the adaptor and/or to the workpiece (4a) therebetween,
wherein the adaptor is an adapter according to any one of claims 1 to 11.

14. A method for machining a workpiece (4a) with a machine tool, the method comprises the steps:
receiving the workpiece (4a) by an adaptor which is arranged in a clamping mechanism (5) of the machine tool, in particular a chuck;
wherein the adaptor has a main body (1) with a hole (4) extending along an axial direction through the main body (1), and an inner support surface (2) for receiving the elongated workpiece (4a) and an outer support surface (3) which is an outer circumferential surface (3) of the main body (1),
wherein the main body (1) is coupled to the clamping mechanism (5) via a friction and/or form-fitting connection at the outer support surface (3) and a shape of the cross-sections orthogonal to the axial direction of the outer support surface (3) and the inner support surface (2) are different;
the method further including the step of fixing, by applying a friction connection, a position of the workpiece (4a) by applying a clamping force to the adaptor.

15. The method for machining a workpiece (4a) according to claim 13,
wherein a clamping force of the clamping mechanism (5) is applied to the outer support surface (3) of the main body (1) of the adaptor to be transferred to the inner support surface (2) to clamp the workpiece (4a) preferably by elastically deforming the main body (1).

16. The method for machining a workpiece (4a) according to claim 13 or 14,
wherein the adaptor includes guiding elements (7); and
when receiving the workpiece (4a), the position of the main body (1) is axially maintained by adjusting the clamping forces applied to the outer support surface (3), and
the guiding elements (7) receive and/or support the workpiece (4a) at a position inside and/or outside of the spindle (6) in the axial direction and are configured to be moved together with the workpiece (4a) in the axial direction.
and/or
wherein when pulling and/or pushing the workpiece (4a) along the axial direction the one or more guiding elements (7) are coupled to the workpiece (4a) through a friction connection and are moved together with the workpiece (4a), and
the guiding elements (7) are stacked together such that the one or more pins (13) of one guide element (7) are slidably moved to receiving sections of another guide element (7) in the axial direction, and/or one or more hooks (12) of the one guiding element (7) are pushed and/or clamped into receiving section of another guiding element (7) for preventing movement of the staked guiding elements (7) in the axial direction.
